# EUROPEAN PATENT APPLICATION

(11) **EP 0 528 081 A1**
(43) Date of publication of application: **24.02.1993**
(21) Application number: 91307503.2
(22) Date of filing: 14.08.1991
(51) Int. Cl.: G01N 31/22, G01N 21/64

(54) **Gas sensor and methods for making and using same**

(30) Priority: 08.08.1991 US 740790
(71) Applicant: MINNESOTA MINING AND MANUFACTURING COMPANY, St. Paul, Minnesota 55133-3427 (US)
(72) Inventor: Yafuso, Masao, El Toro, California 92630 (US); Yan, Cheng Feng, California 92720 (US); Carlock, John Timothy, Columbus, Ohio 43221 (US)
(74) Representative: Baillie, Iain Cameron

(57) **Abstract**

A sensing element for sensing the concentration of an analyte in a medium is disclosed. The sensing element comprises a matrix material having at least one indicator component covalently bonded thereto. The indicator component is capable of providing a signal dependent on the concentration of the analyte in the medium. The indicator component is derived from at least one indicator compound to which is bonded a group including a functional portion which is isolated from the at least one indicator compound.

## Description

### Background of the Invention

The present invention relates to sensing or determining the concentration of an analyte in a medium. More particularly, the invention relates to a sensor and to a method for making a sensor and using a sensor for sensing the concentration of an analyte, for example, a gaseous component of interest, such as oxygen, in a medium, for example, blood.

It is sometimes necessary or desirable for a physician to determine the concentration of certain gases, e.g., oxygen and carbon dioxide, in blood. This can be accomplished utilizing an optical sensor which contains an optical indicator responsive to the component of interest. The optical sensor is exposed to the blood, and excitation light is provided to the sensor so that the optical indicator can provide an optical signal indicative of a characteristic of the analyte or component of interest. For example, the optical indicator may fluoresce and provide a fluorescent optical signal as described in Lubbers et al U.S. Patent No. RE31,897 or it may function on the principals of light absorbance as described, for example, in Fostick U.S. Patent No. 4,041,932.

The indicator material is often physically combined with a highly gas permeable matrix material, such as a polymeric matrix material, which is used to support the indicator material as it is exposed to the analyte. By "highly analyte permeable" is meant a material which is permeable to the analyte, in particular the gas of interest, and reaches equilibrium with the surrounding environment, which is at ambient temperature and atmospheric pressure, with respect to the analyte in a period of time measured in minutes or shorter time intervals rather than hours or longer time intervals.

One problem which has presented itself in the use of such sensors is the loss of indicator material. Thus, after a period of time in use, the amount of indicator material physically combined with the matrix material is reduced and may be leached into the medium. It would be advantageous to provide a gas sensor in which the indicator had a reduced tendency to escape from the matrix material.

Another problem which is often evident is the relatively low solubility of the indicator material in the matrix material. This feature limits the amount of indicator material that can be physically combined with the matrix material. In turn, the signal produced from the indicator/matrix material combination has a reduced intensity because of the relatively reduced amount of indicator material present. Clearly it would be advantageous to include increased amounts of indicator in the matrix material.

Yafuso et al U.S. Patent 4,798,738 discloses chemically attaching ionic component sensitive dye to attachment sites on a water insoluble ionic permeable hydrophilic polymer. This allows the ionic component, e.g., pH, sensor to be constructed in the size domain of an optical fiber. Gas sensors are not disclosed.

### Summary of the Invention

New systems for sensing an analyte have been discovered. These new systems are based, in part, on the discovery that advantageous results are achieved by covalently attaching or bonding one or more analytes, for example, gas, sensitive indicator components or moieties to a matrix material, preferably a highly gas permeable polymeric matrix material and more preferably an addition cure silicone matrix material. Overall, such covalently attached analyte sensitive indicator components are substantially more effective than similar indicators which are physically admixed with the matrix material. For example, covalently bonding the indicator to the matrix material does not substantially interfere with its indicating properties. In addition, covalent bonding does provide for a more durable sensor. That is, the covalently bonded indicator component is more resistant to migration from the matrix material and the sensor into other components of the sensor system or into the medium being sensed. An additional beneficial feature of this invention is that the amount of indicator component to be included in the matrix material is not limited by physical considerations, such as the solubility of the indicator component in the matrix material. Thus, a predetermined, relatively large, amount of indicator component can be covalently bonded to the matrix material to give the desired signal in response to the concentration of analyte, preferably gaseous component, of interest in the medium. In other words, a relatively large amount of indicator component can be covalently bonded to a matrix material to provide a signal which is relatively easily measured to provide a basis for determining the concentration of the analyte of interest.

One broad aspect of the invention involves sensors for sensing an analyte, preferably the concentration of a gas, in a medium, preferably a liquid medium and more preferably blood. In one embodiment, the sensor comprises a sensing element including a matrix material, preferably a polymeric matrix material, more preferably a highly gas permeable polymeric matrix material, having at least one indicator component covalently bonded thereto. The indicator component is derived from an indicator component precursor including at least one indicator compound to which is bonded an attached group (or linker arm) with a functional multiple bond which is isolated from the indicator compound.

As used herein, the term "isolated" means that the functional multiple bond of the attached group is removed from the indicator compound by a linker arm including at least one atom, for example, a carbon atom, in the chain linking the indicator compound, for example, an aromatic ring of the indicator compound, and the functional multiple bond. This is illustrated by the following formula

IC (̵ CH₂ )̵ ₓ CH = CH₂

where IC is the indicator compound, such as a polynuclear aromatic compound; and x is an integer equal to at least 1. The value of x can be any integer equal to 1 or greater provided that the resulting indicator component functions substantially as described herein. In one embodiment, x is in the range of 1 to about 18. In the above-noted formula, the carbon-carbon-double bond,

- CH = CH₂ ,

is isolated from the indicator compound by the linker arm, (̵ CH₂ )̵ₓ , and is bonded directly to the linker arm. If x is equal to zero, the linker arm would be non-existent and the carbon-carbon double bond,

- CH = CH₂ ,

would be considered to be conjugated relative to the indicator compound, rather than isolated from the indicator compound. Such materials including conjugated double bonds are not within the scope of the present invention.

Particularly attractive benefits are obtained when the indicator component is derived from an indicator component precursor including at least one indicator compound or substance which has an aromatic ring to which is directly covalently bonded a group with a functional multiple bond which is isolated by a silicon-free chain (i.e., a chain of atoms linking the aromatic ring to the functional multiple bond which includes no silicon atoms), more preferably a chain linking only carbon atoms, from the aromatic ring. Such indicator component precursors are relatively easy to produce and use, and provide sensing elements with very useful properties.

The present covalently bonded indicator component is capable of providing a signal which is analyte sensitive, for example, dependent on the concentration of the analyte of interest in the medium. A transmission means, which is associated with the sensing element, is preferably included and acts to transmit the signal from the covalently bonded indicator component.

In another broad aspect, the invention is directed to methods for sensing the concentration of an analyte, preferably a gas, of interest in a medium. In one embodiment, this method comprises exposing a sensing element, such as described above, to the medium, causing the indicator component to provide a signal dependent on, preferably a signal indicative of, the concentration of the analyte of interest in the medium, and analyzing this signal in determining the concentration of the analyte of interest in the medium.

A further broad aspect of the invention involves methods for producing a sensing element useful for sensing the concentration of an analyte, preferably a gaseous component, in a medium. In one embodiment, this production method comprises contacting a precursor of at least one indicator component with a polymer or a precursor of a polymer at conditions effective to form a polymeric matrix material having the indicator component covalently bonded thereto. The precursor of the indicator component may be produced from an indicator compound to which is covalently bonded a group (or linker arm) with a functional multiple bond which is isolated from the indicator compound, as described herein. In one particularly useful embodiment, an analyte-sensitive indicator substance is bonded to an addition cure silicone to form a sensor element by a method which comprises functionalizing an analyte-sensitive indicator substance or compound to obtain a group or linker arm with an isolated multiple bond; hydrosilylating the functionalized indicator substance with a polymethylhydrosiloxane; and cross-linking the resulting compound with vinyl terminated polysiloxane.

As used herein, the term "indicator component" means that moiety or entity which is chemically, preferably covalently, bonded to the matrix material and which provides a signal, for example, in response to or dependent on the concentration of the analyte of interest, preferably a signal which is indicative of the concentration of an analyte of interest, in a medium. In effect, the indicator component is an integral part of the matrix material. This is contrasted with sensing elements in which the signal-producing indicator material is a separate chemical entity, for example, a separate indicator substance or compound, physically admixed with the matrix material.

In many instances, such separate indicator substances or compounds are not suitable to be covalently bonded to the matrix material. In these instances, it may be necessary to derivatize or functionalize such indicator substance or compound and produce a precursor of the indicator component. This is done by chemically modifying the indicator substance or compound to include at least one group with a functional multiple bond, which is isolated from the indicator substance or compound, which functional multiple bond is capable of chemically reacting with the matrix material or precursor of the matrix material to covalently bond the indicator component thereto.

The functionalizing of the indicator substance is illustrated by selecting a matrix material comprising a silicone-based polymer and an indicator substance which is a polynuclear aromatic compound. Such polynuclear aromatic compounds include the basic (underivatized) polynuclear aromatic compounds, as well as one or more derivatives thereof, that is one or more derivatives including non-functional groups which do not react with the matrix material or matrix material precursor. Such indicator substances or compounds are not able to be covalently bonded to such silicone-based polymers or their precursors. However, these indicator substances can be reacted to form groups or linker arms with isolated multiple bonds, such as appropriately configured alkenyl groups, substituted alkenyl groups and the like, which are capable of reacting with and bonding to silicone-based polymers and/or precursors thereof, such as polymethylhydrosiloxanes. In particular, if the silicone-based polymer is to be derived by addition curing, it is preferred to functionalize or derivatize the indicator substance or compound to attach one or more alkenyl groups and/or substituted alkenyl groups thereto. Such groups are capable of being hydrosilylated with a polymethylhydrosiloxane to covalently bond the indicator component to the silicone-based polymer precursor. The resulting precursor or compound can be cross-linked with vinyl-terminated polysiloxane, thereby forming an addition-cure silicone including a covalently bonded analyte-sensitive substance.

Any type of group may be attached to the indicator substance or compound, provided that such group is with a functional multiple bond, preferably a carbon-carbon multiple bond and more preferably a carbon-carbon double bond, which is isolated from the indicator substance and is capable of chemically reacting with a polymer or polymer precursor to form the covalently bonded indicator component. The group or linker arm also should have substantially no undue detrimental effect on the analyte sensitivity of the indicator component or on the medium to which the indicator component is exposed. Preferably, the group or linker arm is organic in nature.

As noted above, particularly useful groups or linker arms include groups, preferably alkenyl groups, with isolated carbon-carbon double bonds; substituted groups, preferably substituted alkenyl groups, with isolated carbon-carbon double bonds and the like. Such groups and substituted groups preferably include 3 to about 20 carbon atoms, and more preferably have a terminal double bond, i.e., a double bond associated with the terminal carbon atom. Particularly useful groups include those with linker arms having 1 to about 18 carbon atoms. To illustrate, the preferred groups include, but are not limited to, 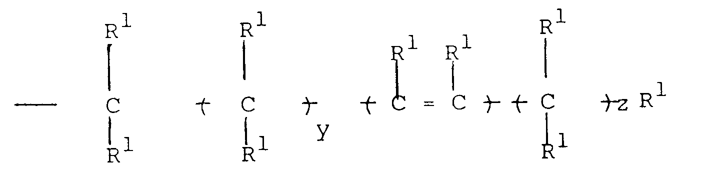
where each R¹ is independently selected from H, monovalent hydrocarbyl radicals and substituted monovalent hydrocarbyl radicals, and each of y and z is independently selected from integers in the range of 0 to about 17, provided that the total number of carbon atoms is in the range of 3 to about 20. Also, two or more of the R¹s can be bonded together in a ring structure. Each R₁ is preferably independently selected from H, aliphatic monovalent hydrocarbyl radicals and substituted aliphatic monovalent hydrocarbyl radicals, more preferably from H, alkyl radicals and substituted alkyl radicals. More preferably, the group includes only one functional carbon-carbon double bond. Particularly preferred alkenyl groups are those which include a terminal double bond, that is, with reference to the above-noted formula, those alkenyl groups in which z is 0 and the terminal R¹ is H. In one useful embodiment, all the R¹s are H. Examples of useful alkenyl groups include allyl, butenyl, hexenyl, heptenyl, octenyl, decenyl and the like groups. The presently useful substituted alkenyl groups include the groups described herein substituted with one or more substituent groups including elements such as oxygen, nitrogen, carbon, hydrogen, silicon, halogen, phosphorus and the like and mixtures and combinations thereof. Thus, the attached group or linker arm can include at least one heteroatom.

Various chemical modification techniques, many of which are conventional and well known in the art, may be employed to functionalize or derivatize the indicator substance or compound with the group or groups (linker arm or arms) to produce the indicator component precursor. Care should be exercised to avoid destroying or even substantially diminishing the analyte sensitivity (e.g., to the gas component of interest) of the indicator substance in the process of attaching one or more groups. However, it has been found that sufficient sensitivity is maintained if the characteristic structure of the indicator substance remains substantially unaffected, i.e., intact, after the chemical modification.

In a particularly useful embodiment, the indicator substance or compound is sensitive to the concentration of oxygen and is one or more polynuclear aromatic compounds and/or one or more derivatives thereof. The basic polynuclear aromatic compound is preferably any fluorescent or absorbent, more preferably fluorescent, optical indicator of the polynuclear aromatic class. The polynuclear aromatic compound from which the indicator component is derived is still more preferably selected from the group consisting of perylene, derivatives of perylene, decacyclene, derivatives of decacyclene, benzoperylene, for example, benzo[ghi]perylene, derivatives of benzoperylene, for example, derivatives of benzo[ghi]perylene, coronene, derivatives of coronene and mixtures thereof. Since perylene and derivatives of perylene have a relatively reduced sensitivity to oxygen, other polynuclear aromatic compounds, such as those noted herein, are preferably employed when the analyte is oxygen.

If desired, the basic polynuclear aromatic compound may be derivatized with one or more other groups, e.g., non-functional substituent groups such as alkyl groups. Such derivatives are discussed in Yafuso et al U.S. Patent 4,798,738. One goal of the use of such derivatives is to increase the solubility of the indicator substance in the matrix material. The "covalent bonding" feature of the present invention mitigates against this solubility constraint. Thus, the basic or underivatized polynuclear aromatic compounds, e.g., as described herein, may be advantageously used to produce the indicator component.

In another useful embodiment, the sensing element further comprises at least one additional indicator component covalently bonded to the matrix material. The additional indicator component may be derived in much the same way that the indicator component is. For example, an additional indicator substance or compound may be derivatized to include a covalently bonded group having a functional multiple bond which is isolated from the additional indicator substance. This additional indicator component is capable of providing an additional signal which is substantially independent of, or has substantially reduced sensitivity to, the analyte, for example, the gas of interest, in the medium to which the indicator component is sensitive. The transmission means preferably acts to transmit this additional signal from the additional indicator component. By comparing, e.g., ratioing, the signal from the indicator component and the additional signal from the additional indicator component, one can improve the accuracy of the analyte concentration determination. For example, such comparing reduces, or even eliminates, the detrimental effects on concentration determination accuracy caused by, for example, fluctuations in the signal or signals used to excite the sensing element, and signal transmission losses from physically bending the transmission means, e.g., an optical fiber or the like or a substantially equivalent element useful for transmitting signals from the indicator component and/or additional indicator component.

If an indicator component and an additional indicator component are to be used, one preferred combination is an indicator component derived from benzo[ghi]perylene derivatives of benzo[ghi]-perylene and mixtures thereof, and an additional indicator component derived from perylene, derivatives of perylene and mixtures thereof.

Any suitable matrix material, preferably a polymeric matrix material, may be employed provided that it functions as described herein. Particularly useful polymeric matrix materials include those based on addition cure silicone polymers. The matrix material, or the precursor thereof, should be such as to chemically react with the precursor or precursors of the indicator component and produce a sensing element with covalently bonded indicator component.

Although various polymers can be employed as the matrix material, it is preferred that the matrix material be permeable, more preferably highly permeable, to the analyte, for example, gas, of interest so that the sensitivity of the indicator component to the analyte of interest is optimized. If a silicone-based polymer is employed in the matrix material, it may include polymers derived from vinyl terminated polysiloxanes and polyalkyl(phenyl)hydrosiloxanes, herein referred to as polymethylhydrosiloxanes. Such polymethylhydrosiloxanes include, but are not limited to, those having the formula 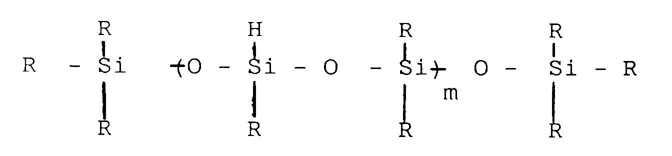
where m is an integer of from 1 to 500 and R is independently selected from the group consisting of H, alkyl, and substituted alkyl, preferably CH₃, CH₂ CH₂ CF₃ and CH₂(CH₂)ₙCH₃, and phenyl, where n is an integer from 1 to 22. Of this group, polymers in which a major portion of the R groups are methyl are preferred because of the high gas permeability of such polymers. It is of course realized that other members of the homologous series which include the above-noted polymers may also be used. The final silicone-based matrix material is cross-linked. Suitable vinyl terminated polysiloxanes include two or more functional vinyl groups which react with the hydride or hydro groups of the polymethylhydrosiloxanes to form the cross-linked matrix material. Such cross-linking advantageously occurs in the presence of a catalyst, such as a platinum-containing catalyst. The properties of the cross-linked silicone can be varied by changing the degree of cross-linking, for example, by adjusting the concentration of the Si-H groups or component on the polymethylhydrosiloxanes and/or the molecular weight of the vinyl-terminated polysiloxanes.

An optical sensor constructed in accordance with the teachings of this invention preferably has a higher concentration of the indicator component in the polymeric matrix relative to the concentration of a non-covalently bonded indicator substance or compound which is physically mixed in a matrix material and, as a result thereof, the output signal intensity or strength obtainable from the indicator component is also relatively higher.

The precursors of the indicator components useful in the present invention can be obtained using synthesizing procedures, such as a Friedel-Craft reaction. The indicator component precursor or precursors thus obtained can be dispersed in a silicone-based polymer, such as polymethylhydrosiloxane, in a volatile solvent, such as benzene, hexane and the like, and be allowed to react to covalently bond the indicator component or components to the silicone-based polymer. The silicone-based polymer, having the chemically attached indicator component or components, is then reacted, for example, using conventional addition curing, to form the sensing element.

An alternative method for producing the present sensing element involves combining the precursor or precursors of the indicator component or components with the vinyl-terminated polysiloxane, preferably in an inert solvent to promote dissolution of the above-noted precursor or precursors, and any catalyst e.g., platinum group metal, which may be employed. This combination is then mixed with polymethylhydrosiloxane at conditions effective to covalently bond the indicator component or components to the matrix material and form the present sensing element. These alternatives have been found to be effective in increasing the degree to which the indicator component or components is covalently bonded to the matrix material.

These and other aspects and advantages of the present invention are set forth in the following detailed description and claims, particularly when considered in conjunction with the accompanying drawing.

### Brief Description of the Drawing

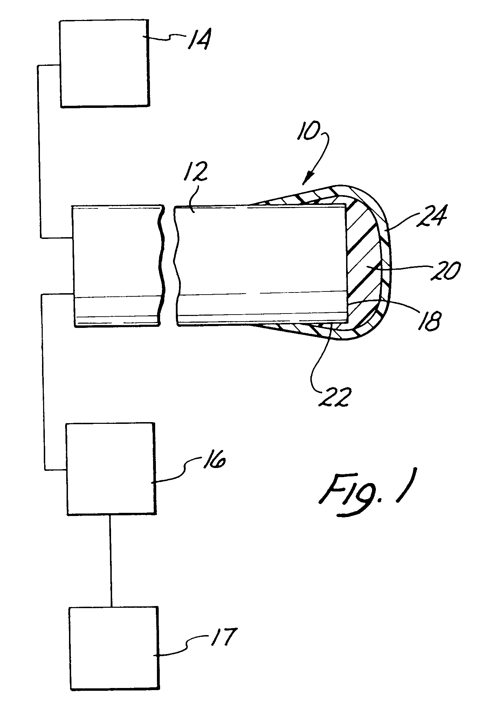

Fig. 1 is a schematic illustration of a sensor apparatus according to the present invention.

### Detailed Description of the Drawing

Fig. 1 shows a sensor 10 according to the present invention. Sensor 10 is adapted to determine the concentration or partial pressure of oxygen in blood. An optical fiber 12 is connected to an appropriate light transmitting apparatus 14, which is capable of transmitting light at 395 nanometers and at 425 nanometers. The light transmitting apparatus 12 generates the excitation light at these two wavelengths. The optical fiber 12 is also connected to a light receiving apparatus 16, which, in turn, is connected to a conventional electronic processor 17.

Located on the optical surface 18 of the optical fiber 12 is a matrix 20 which is a highly oxygen permeable material, such as a cross-linked, siloxane-based polymer. Matrix 20 includes about 1.0% by weight of an indicator component derived from allyl benzo[ghi]perylene covalently bonded to the polymer and about 1.0% by weight of allyl perylene covalently bonded to the polymer.

The matrix 20 adheres to the optical surface 18 and slightly down along the sides 22 of the end of fiber 12. An opaque overcoating 24, comprising a mixture of carbon black and cellulosic material, can then be applied over the totality of the matrix 20 and down further along the side 22 of the fiber 12.

In use, sensor 10 functions as follows. The tip of optical fiber 12 including matrix 20 and overcoating 24 is exposed or immersed in blood, the oxygen concentration of which is to be determined. Light transmitting apparatus 14 transmits light at 395 nanometers to the optical fiber 12. The excitation light at 395 nanometers causes the benzo[ghi]perylene functionality in matrix 20 to fluoresce. The lifetime of this fluorescent signal, at a wavelength of about 450 nanometers, is longer than about 50 nanoseconds. A fluorescent signal is transmitted from matrix 20 through optical fiber 12 to light receiving apparatus 16. This fluorescent signal, derived from excitation light at 395 nanometers, depends on the concentration of oxygen in the blood being analyzed. Processor 17 uses information received by light receiving apparatus 16 on this fluorescent signal to determine a preliminary value of the oxygen concentration in the blood. Receipt and analysis of this fluorescent light by light receiving apparatus 16 and processor 17 is carried out in a known manner which may be similar to that described in the above-referenced Lubbers, et al patent and in Heitzmann U.S. Patent 4,557,900.

Light transmitting apparatus 14 then transmits light at 430 nanometers to the optical fiber 12. The excitation light at 430 nanometers causes the perylene functionality in matrix 20 to fluoresce. The lifetime of this fluorescent signal, at a wavelength of about 450 nanometers, is shorter than about 5 nanoseconds. A fluorescent signal is transmitted from matrix 20 through optical fiber 12 to light receiving apparatus 16. This fluorescent signal, derived from excitation light at 430 nanometers, is only weakly responsive to the concentration of oxygen in the blood being analyzed. Processor 17 uses information received by light receiving apparatus 16 of this fluorescent signal to develop a ratio of the fluorescent signal derived from excitation at 395 nanometers to the fluorescent signal derived from excitation at 430 nanometers. Using this ratio together with the above-noted preliminary oxygen concentration, processor 17 determines a corrected or final concentration of oxygen in the blood to be analyzed. This corrected oxygen concentration is found to be accurate even if the optical fiber 12 is bent at one or more points along its length and/or if other light transmission difficulties are encountered.

The above-noted procedure may occur periodically or even substantially continuously to give substantially continuous oxygen concentration results. Of course, the excitation at 430 nanometers can take place before excitation at 395 nanometers. Also, by proper selection of the optical indicator components, the concentration of other gaseous components of interest can be determined. In addition, media other than blood can be analyzed.

The optical fiber 12 may be in the form of a probe or a catheter insertable into a blood vessel of a patient to provide continuous on-line in vivo monitoring of oxygen concentration in the blood. Alternately, the present sensor can be embodied in a flow-through housing as shown, for example, in the above-referenced Heitzmann patent, to provide extra corporeal monitoring of oxygen concentration in the blood.

Over time, the sensor 10 maintains its ability to sense the concentration of oxygen in the blood. The covalently bonded benzo[ghi]perylene functionality and perylene functionality remain in matrix 20 and are not leached into the blood. Also, the relatively large amounts of such functionalities in matrix 20 provide for intense signals which are easily measured. This, in turn, facilitates increased accuracy in measuring oxygen concentrations.

The following non-limiting Examples illustrate certain aspects of the invention.

### EXAMPLE 1

A mixture of 370 mg of benzo[ghi]perylene and 30 ml. of ortho-dichlorobenzene was prepared. An additional 30 ml of ortho-dichlorobenzene was included to completely solubilize the benzo[ghi]perylene. Aluminum chloride in an amount of about 150 mg was then added to the solution. 15 ml of allyl chloride was added to the solution, which became black.

Samples of the mixture were taken after 15 minutes and 35 minutes for high pressure liquid chromatography analysis. After 3/4 of an hour, the mixture was quenched to stop the chemical reaction. The mixture was then washed twice with a 5% by weight aqueous solution of sodium hydroxide. A brown, muddy organic phase resulted. This material was washed with water. The washed organic phase was dried in the presence of sodium sulfate. The dried organic phase, which still contained a substantial amount of water, was filtered, producing a brown filtrate. The filter cake was rinsed with hexane under suction. The combined water/hexane filtrate was a blackish brown.

The organic phase was collected and stripped of the solvent to produce 5.5 g of a black oil. Using a column packed with silica gel, this oil was chromatographed with the product being collected as a number of separate fractions. A green waxy material was obtained from the early fractions. High pressure liquid chromatography showed that this material was primarily one or more allyl derivatives of benzo[ghi]perylene.

### EXAMPLE 2

112 mg of the green waxy material from Example 1 was dissolved in 1.0 ml of toluene to form a green solution.

A mixture of 0.5 ml of this green solution and 5 g of a vinyl terminated dimethylsiloxane polymer, sold by Petrarch Systems under the Trademark PS-443, was prepared. A catalytically effective amount of a platinum-containing catalyst, sold by Petrarch Systems under the Trademark PS-075, was added.

0.55 g of this mixture was combined with 0.05 g of a hydromethylsiloxane sold by Petrarch Systems under the Trademark PS-123. This mixture was cast onto a glass slide to cure.

The resulting silicone film exhibited the fluorescence characteristics of benzo[ghi]perylene which was not removed by exhaustive extraction with hexane. This film was tested for fluorescence intensity and found to have more than adequate intensity to be effective for use in an in vivo blood oxygen sensor.

### EXAMPLE 3

A mixture of 496 mg of perylene, 80 ml of orthodichlorobenzene and 1 ml of allyl chloride was prepared. Over approximately 5 hours, approximately 600 mg of aluminum chloride, an additional 4 ml of allyl chloride and 1 ml of 3-chloro-1-butene were added to the mixture. High pressure liquid chromatography was used to monitor the reaction, if any. No reaction was observed until the addition of 3-chloro-butene.

The mixture was quenched to stop the chemical reaction. The mixture was washed with a 10% by weight aqueous solution of sodium hydroxide and then with water.

The organic phase was collected and stripped to remove water and solvent, and produced 4.0 g of a black oil. Using a column packed with silica gel, this oil was chromatographed with the product being collected as 29 separate fractions. Hexane was first used in the column. The chromatography was completed with a mixture of hexane and ethyl acetate. A reddish brown wax material was obtained from fractions 28 and 29. Based on analysis, this material was primarily one or more allylic derivatives of perylene.

### EXAMPLE 4

890 mg of the reddish brown wax material from cuts 28 and 29 of Example 3 was mixed with 9 ml of toluene to form a green solution.

Example 2 was repeated using 0.5 ml of this green solution instead of the green solution noted in Example 2.

The resulting silicone film exhibited the fluorescence characteristics of perylene which was not removed by exhaustive extraction with hexane, which showed that a fluorescent dye was incorporated in the film.

This film containing covalently bonded perylene functionality is effective for use in an in vivo blood oxygen sensor. For example, the perylene functionality can be employed as an additional indicator component, as described herein.

While this invention has been described with respect to various specific examples and embodiments, it is to be understood that the invention is not limited thereto and that it can be variously practiced within the scope of the following claims.

## Claims

1. A method for bonding an analyte-sensitive indicator substance to addition-cure silicone to form a sensor element comprising the steps of:
functionalizing the analyte-sensitive indicator substance to obtain a linker arm with an isolated multiple bond;
hydrosilylating the functionalized indicator substance with a polymethylhydrosiloxane; and
cross-linking the resulting compound with vinyl-terminated polysiloxane.

2. The method of claim 1 wherein the indicator substance is a polynuclear aromatic compound.

3. The method of any of claims 1 and 2 wherein the isolated multiple bond is selected from a group consisting of carbon-oxygen, carbon-carbon, carbon-nitrogen and nitrogen-nitrogen.

4. The method of any of claims 1, 2 or 3 wherein the functionalization step is performed by adding a linker molecule.

5. A method for producing a sensing element useful for sensing the concentration of an analyte in a medium comprising:
contacting at least one precursor of an indicator component with a reactable material at conditions effective to form a matrix material having said indicator component covalently bonded thereto, said at least one precursor of said indicator component produced from an indicator compound having an aromatic ring to which is directly covalently bonded a group a silicon-free chain from said aromatic ring and which is capable of chemically reacting at said conditions, and said covalently bonded indicator component is capable of providing a signal dependent on the concentration of said analyte in said medium.

6. A method for producing a sensing element useful for sensing the concentration of an analyte in a medium comprising:
contacting a composition containing at least one precursor of an indicator component; and at least one of a silicone-based polymer and a precursor of a silicone-based polymer at conditions effective to form a cross-linked, silicone-based polymeric matrix material having said indicator component covalently bonded thereto, said covalently bonded indicator component being capable of providing a signal dependent on the concentration of said analyte in said medium, said at least one precursor of said indicator component including an indicator compound having an aromatic ring to which is directly covalently bonded a group with a functional multiple bond which is isolated by a silicon-free chain from said aromatic ring.

7. The method of any of the preceeding claims wherein the analyte is oxygen.

8. A sensor element manufactured in accordance with the method of any of the preceeding claims.

9. A sensing element for sensing the concentration of an analyte in a medium comprising:
a matrix material having at least one indicator component covalently bonded thereto, said indicator component being capable of providing a signal dependent on the concentration of an analyte of
a matrix material having at least one indicator component covalently bonded thereto, said indicator component being capable of providing a signal dependent on the concentration of an analyte of interest in a medium, said indicator component being derived from an indicator component precursor including at least one indicator compound having an aromatic ring to which is directly covalently bonded a group with a functional multiple bond which is isolated by a silicon-free chain from said aromatic ring.

10. A method for sensing the concentration of an analyte in a medium comprising:
exposing a sensing element to said medium, said sensing element comprising a matrix material having at least one indicator component covalently bonded thereto, said indicator component being capable of providing a signal dependent on the concentration of an analyte of interest in a medium, said indicator component being derived from at least one indicator compound having an aromatic ring to which is directly covalently bonded a group with a functional multiple bond which is isolated by a silicon-free chain from said aromatic ring;
causing said indicator component to provide said signal; and
analyzing said signal in determining the concentration of said analyte in said medium.
